# EUROPÄISCHE PATENTSCHRIFT

(11) **EP 0 548 665 B1**
(45) Veröffentlichungstag und Bekanntmachung des Hinweises auf die Patenterteilung: **25.09.1996**
(21) Anmeldenummer: 92120926.8
(22) Anmeldetag: 09.12.1992
(51) Int. Cl.: G11B 5/708

(54) **Magnetische Aufzeichnungsträger**
Magnetic recording medium
Milieu d'enregistrement magnétique

(30) Priorität: 21.12.1991 DE 4142635; 21.12.1991 DE 4142643
(43) Veröffentlichungstag der Anmeldung: 30.06.1993
(73) Patentinhaber: BASF Magnetics GmbH, 68165 Mannheim (DE)
(72) Erfinder: Schneider, Norbert, W-6701 Altrip (DE); Lehner, August, W-6701 Roedersheium-Gronau (DE); Klein, Ursula, W-6703 Limburgerhof (DE); Lenz, Werner, Dr., W-6702 Bad Duerkheim (DE); Balz, Werner, Dr., W-6703 Limburgerhof (DE); Kohl, Albert, W-6711 Laumersheim (DE); Bettinger, Guenter, W-6707 Schifferstadt (DE)
(74) Vertreter: Langfinger, Klaus-Dieter, Dr.

(56) Entgegenhaltungen:
- DE-A- 3 149 764
- DE-A- 3 438 431
- US-A- 4 320 159
- PATENT ABSTRACTS OF JAPAN vol. 10, no. 004 (C-322)9. Januar 1986

## Beschreibung

Die Erfindung betrifft magnetische Aufzeichnungsträger, erhalten durch Herstellen einer Dispersion von anisotropem magnetischem Material und üblichen Zusatzstoffen in einer Lösung eines polymeren Bindemittels in einem organischen Lösungsmittel, schichtförmiges Auftragen der Dispersion auf ein nichtmagnetisierbares Trägermaterial, anschließendes Ausrichten des anisotropen magnetischen Materials in einem Magnetfeld und Verfestigen der aufgebrachten Magnetschicht.

An magnetische Aufzeichnungsträger, die in modernen Audio- oder Videoaufzeichnungs- und Wiedergabegeräten verwendet werden, werden Anforderungen in mehrfacher Hinsicht gestellt. Neben den hohen Anforderungen an die Aufzeichnungs- und Wiedergabeeigenschaften für die Anwendung von Audiobändern, Videobändern und flexiblen Datenträgern, die stetig verbessert werden, wird vor allem bezüglich der mechanischen Eigenschaften und der Verringerung von eluierbaren Stoffen der Aufzeichnungsträger eine ständige Anpassung und Verbesserung gefordert. Die Magnetschichten müssen sehr flexibel sein, eine hohe Elastizität und eine hohe Reißfestigkeit aufweisen. Außerdem werden, zur Vermeidung von Pegeleinbrüchen, zunehmend eine Verringerung der Reibungswerte, eine Erhöhung der Abrieb- und Verschleißfestigkeit, sowie eine Verbesserung der Tropenfestigkeit notwendig. Da zudem die Magnetschichten der Aufzeichnungsträger aus Gründen der Aufzeichnung immer höherer Frequenzen in gleichem Maße immer glatter werden müssen, ergibt sich das Problem, daß derart glatte Magnetschichten schon bei leicht angehobenen Temperaturen von etwa 30°C und hoher Luftfeuchtigkeit im Spielbetrieb blockieren. Dadurch werden die magnetischen Aufzeichnungsträger unbrauchbar, sie schmieren, an Aufnahme- und Wiedergabeköpfen bilden sich Ablagerungen.

Um diese Fehler zu vermeiden, ist es erforderlich, daß außer der Verwendung besonders geeigneter Magnetpigmente, die in den Magnetschichten insgesamt enthaltenen Materialien so ausgewählt werden, daß die Magnetschichten mit der besonders hohen Magnetisierung in der Aufzeichnungsrichtung und bei den geforderten glatten Oberflächen auch die zwingend notwendigen mechanischen Eigenschaften aufweisen. Gerade die Verbesserung der genannten Eigenschaften, wie gleichmäßige Oberflächenrauhigkeit, bei guter Remanenz und Ausrichtungsgrad sowie die Gewährleistung hervorragender mechanischer Eigenschaften sind bei ein und demselben magnetischen Material im hohen Maße von der Herstellung der Magnetschicht, des verwendeten Bindemittels und der Zusatzstoffe abhängig. Unter Zusatzstoffen sind in erster Linie die sogenannten Gleitmittel, Hydrophobierungsmittel und Dispergierhilfsmittel genannt, welche wesentlichen Einfluß auf die elektroakustischen, magnetischen und mechanischen Eigenschaften der magnetischen Aufzeichnungsträger ausüben.

Die Verminderung der Oberflächenrauhigkeit der Magnetschicht ist bei hochwertigen magnetischen Aufzeichnungsträgern besonders wichtig, da für die Auflösung kleinster Wellenlängen ein besonders guter Band/Kopf-Kontakt erforderlich ist. Daraus ergeben sich die hohen Anforderungen, die an die Gleiteigenschaften bzw. Verschleißfestigkeit der Bänder gestellt werden, da eine Beschädigung der Magnetschicht sofort zu Pegeleinbrüchen führt.

Zur Lösung dieser Probleme wurden bisher sehr viele Wege beschritten, wie der Zusatz von Hydrophobierungsmitteln, nachträgliches Aufbringen von Gleitmitteln auf die Magnetschicht, Erhöhung der Oberflächenhärte der Magnetschicht durch Vernetzung und der Zusatz unmagnetischer Pigmente, Bindemittelkombinationen aus zwei bis vier Lackkomponenten, die ggf. zusätzlich vernetzt werden können. Die Vielzahl der bisher vorgeschlagenen Maßnahmen weisen oft erhebliche verfahrenstechnische Mängel auf, d.h. sie erfüllen die Anforderungen nicht oder nur ungenügend. Besonders hohe Anforderungen werden in zunehmendem Maße an die Laufeigenschaften der magnetischen Aufzeichnungsträger unter extremen Klimabedingungen, besonders bei hoher Luftfeuchtigkeit und hoher Temperatur gestellt. Eine Lösung dieser Probleme wurde vielfach mit Hilfe des Zusatzes kleiner Mengen an speziellen Gleitmitteln oder auch Füllstoffen, die bei der Dispergierung der magnetischen Materialien oder bei der Herstellung der Magnetschichten zugemischt wurden, versucht. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester, Fettsäureamide, Siliconöle, hydrophobierte Polykieselsäuren oder auch Ruß. So sind aus US-A 4 320 159 magnetische Aufzeichnungsträger bekannt, die eine hydrophobierte Polykieselsäure enthalten, wobei mindestens 70 % der SiOH-Gruppen methyliert sind, entsprechend einem Kohlenstoffgehalt von 0,8 bis 1,2 Gew.-%. Diese Produkte bringen besonders in Kombination sehr gute Laufeigenschaften bei üblichen Klimabedingungen. Unter extremen Klimabedingungen sind selbst bei Verwendung spezieller Bindemittelsysteme, wie sie z.B. für hochaussteuerbare Audio- und Videobänder eingesetzt werden, solche Bänder beim Betrieb in hoher Luftfeuchtigkeit und einer Temperaturbelastung bis 85°C nur bedingt geeignet. So konnten durch die Kombination von speziellen magnetischen Materialien, üblichen feinteiligen Fällungskieselsäuren mit Zinkfettsäuresalzen unter üblichen Klimabedingungen insbesondere sehr gute Reibwerte erzielt werden. Jedoch treten bei hoher Temperatur bis 85°C und auch hoher Luftfeuchtigkeit ein verstärkter Abrieb und ein Verkleben der einzelnen Bandlagen auf. Dieser Einfluß der Luftfeuchtigkeit auf die Magnetschicht führt bei magnetischen Aufzeichnungsträgern, deren magnetisches Material aus Chromdioxid besteht, zu einem weiteren Nachteil, einer teilweisen Zersetzung des Chromdioxids nach Wasserlagerung.

Aufgabe der vorliegenden Erfindung war es daher, durch eine einfache und sichere Maßnahme feinrauhe magnetische Aufzeichnungsträger bereitzustellen, welche hinsichtlich Verschleißfestigkeit und Tropenfestigkeit der Schicht auch unter einem Temperatureinfluß bis zu 85°C verbessert sind. Daneben sollen durch diese Verbesserungen Pegeleinbrüche vermieden und das Blockieren der Bänder unter extremen Laufbedingungen verhindert werden.

Es wurde nun gefunden, daß durch magnetische Aufzeichnungsträger, erhalten durch Herstellen einer Dispersion von anisotropen magnetischem Material und üblichen Zusatzstoffen in einer Lösung eines polymeren Bindemittels in einem organischen Lösungsmittel, schichtförmiges Auftragen der Dispersion auf ein nichtmagnetisierbares Trägermaterial, anschließendes Ausrichten des anisotropen magnetischen Materials in einem Magnetfeld und Verfestigen der aufgebrachten Magnetschicht die Aufgabe gelöst werden kann, wenn eine feinteilige Polykieselsäure, die mit 1,8 bis 3,2 Gew.-%, bezogen auf die Polykieselsäure, chemisch gebundenem Kohlenstoff hydrophobiert ist, in einer Menge von 0,3 bis 5 Gew.-%, bezogen auf die Menge an magnetischem Material, in der Magnetschicht enthalten ist.

In einer vorteilhaften Ausgestaltung der erfindungsgemäßen magnetischen Aufzeichnungsträger ist in der Magnetschicht die feinteilige mit chemisch gebundenem Kohlenstoff hydrophobierte Polykieselsäure in Kombination mit 0,1 bis 1,5 Gew.-%, bezogen auf die Menge an magnetischem Material, hochviskosem Polysiloxan enthalten.

Bisher wurden, wie in der Lackverarbeitung bekannt, bevorzugt niedermolekulare oder chemisch modifizierte Siliconöle eingesetzt. Hochmolekulare Polydimethylsiloxane sind sehr schwer löslich und unverträglich, dies führt zu starker Kraterneigung und Hammerschlag-Effekt. Umso überraschender war es, daß in Kombination mit hydrophobierter Kieselsäure die Verlaufsstörungen, ersichtlich in Tonpegelschwankungen bei 10.000 bis 40.000 Hz deutlich verbessert wurden. Bei Verwendung von niedermolekularen Siliconölen oder modifizierten Siliconölen zeigen sich ganz besonders Nachteile im Laufverhalten, z.B. Wow und Flutter und Tropenfestigkeit.

Bei den erfindungsgemäß verwendeten hochmolekularen Polysiloxanen handelt es sich um Polydimethylsiloxane mit einer Viskosität von größer 10.000 bis 500.000 mPas, bevorzugt, weil leichter verarbeitbar, von größer 10.000 bis 100.000 mPas, am günstigsten ist der Viskositätsbereich von 20.000 bis 80.000 mPas. Der günstige Anteil des Siliconöls, bezogen auf das Magnetpigment, liegt bei 0,1 bis 1,5, bevorzugt 0,15 bis 0,75 Gew.-%.

Die in den erfindungsgemäßen magnetischen Aufzeichnungsträgern enthaltene hydrophobierte Polykieselsäure weist chemisch gebundenen Kohlenstoff in einer Menge von 0,5 bis 5 Gew.-%, bevorzugt 1,8 bis 3,2 Gew.-%, einen pH-Wert, gemessen in gleichen Teilen Methanol und Wasser von 7,5 bis 12, bevorzugt 8 bis 7 und eine Oberfläche nach BET von 70 bis 400 m²/g, bevorzugt 90 bis 200 m²/g auf. Diese hydrophobierte Polykieselsäure ist mit Wasser nicht benetzbar.

Durch diesen Zusatz der Polykieselsäure zum Aufbau der Magnetschicht, wobei ihr Anteil bevorzugterweise 0,3 bis 2 Gew.-% beträgt, wird das Laufverhalten sowohl bei hoher Luftfeuchtigkeit als auch hoher Temperatur selbst bei einer Lagerung bei 85°C wesentlich verbessert.

Bei der Herstellung der erfindungsgemäßen magnetischen Aufzeichnungsträger hat sich außerdem überraschenderweise herausgestellt, daß die Zugabe der üblichen Gleitmittel ohne besondere Nachteile um bis zu 50 % reduziert werden kann.

Aufbau und Herstellung der erfindungsgemäßen magetischen Aufzeichnungsträger erfolgt in bekannter Weise.

Als magnetisches Material werden bevorzugt feinteiliges stäbchenformiges Gamma-Eisen (III) oxid mit einer durchschnittlichen Teilchengroße von 0,1 bis 2 µm und insbesondere von 0,1 bis 0,9 µm oder stäbchenförmiges Chromdioxid der gleichen Teilchenstruktur, wie beim Eisenoxid angegeben, verwendet. Weitere geeignete Materialien sind Gamma-Eisen (III) oxid mit Dotierungen von Schwermetallen, insbesondere von Kobalt sowie feinteilige Metallegierungen von Eisen, Kobalt und/oder Nickel. Besonders geeignet ist feinteiliges Chromdioxid. Ebenfalls geeignet sind Pigmentmischungen.

Die die magnetisierbare Schicht bildenden Bindemittel bestehen zu mindestens 40 Gew.-% aus Polyurethanen. Hierfür kommen beispielsweise lösungsmittelhaltige Polyurethanelastomere in Frage, wie sie z.B. in der DE-B 11 06 959 oder in der DE-B 27 53 694 beschrieben sind. Weitere geeignete Polyurethane sind in den DE-A 32 27 163 und 32 27 164 offenbart. Die Polyurethane können dabei als alleinige Bindemittel oder vorzugsweise in Abmischungen mit anderen Polymeren (wie z.B. Polyvinylformale, Phenoxyharze, VC-Copolymerisate) verwender werden. Von der zweiten Bindemittelkomponente werden vorzugsweise 10 bis 40 % zugesezt. Bei diesen Bindemitteln ist es von besonderem Vorteil, daß ganz oder teilweise auf zusätzliche Dispergiermittel verzichtet werden kann.

Eine gegebenenfalls, je nach Bindemittelsystem und Bandeigenschaftsprofil, erforderliche Vernetzung der magnetischen Aufzeichnungstrager ist die Umsetzung der Polyurethane oder Polyurethanbindemittelgemische mit Polyisocyanaten. Für die Vernetzung kann eine Vielzahl organischer Di-, Tri- oder Polyisocyanate oder Isocyanatprepolymere bis zu einem Molgewicht von 10 000, vorzugsweise zwischen 500 und 3 000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die eingesetzte Menge an Polyisocyanat ist dabei dem jeweiligen Bindemittelsystem anzupassen.

Als Lösungsmittel werden je nach eingesetztem Bindemittel Wasser, cyclische Ether, wie Tetrahydrofuran und Dioxan und cyclische Ketone, wie Cyclohexanon, verwendet. Die Polyurethane sind auch in anderen stark polaren Lösungsmitteln, wie Dimethylformamid, N-Methylpyrrolidon, Dimethylsulfoxid oder Ethylglykolacetat löslich. Ebenso ist es möglich, die genannten Lösungsmittel mit Aromaten, wie Toluol oder Xylol und Estern, wie Ethyl- oder Butylacetat, zu mischen.

Den Dispersionen aus magnetischem Material und Bindemittel werden im allgemeinen weitere Zusatzstoffe zur Verbesserung der Magnetschicht zugesetzt. Beispiele solcher Zusätze sind Fettsäuren, Polycarbonsäuren, Mono-, Di- oder Polysulfonsäuren bzw. Phosphorsäuren, deren Gemische, Ester oder Salze mit Metallen der ersten bis vierten Gruppe im Periodensystem, Lecithine, Fluorcarbone, außerdem Füllstoffe, wie Ruß, Graphit, Quarzmehl und/oder nicht magnetisierbares Pulver auf Silicatbasis oder Eisenoxidbasis. Üblicherweise liegen solche Zusätze insgesamt unter 10 Gew.-%, bezogen auf die Magnetschicht.

Der für die erfindungsgemäßen magnetischen Aufzeichnungsträger kennzeichnende Anteil an Polykieselsäure wird durch Zugabe dieser Substanzen vor oder am Ende der Dispergierung erreicht. Ebenfalls geeignet sind Pigmentpasten, die zur Magnetdispersion gemischt werden. Dadurch läß sich eine gute und gleichmäßige Verteilung erreichen. Werden zum Aufbau der magnetisierbaren Schicht weitere an sich übliche Zusatzstoffe benutzt, die neben anderen Effekten, wie Verbesserung der Gleiteigenschaften und des Verlaufs, auch die Dispergierung begünstigen, so bleiben die vorteilhaften Eigenschaften durch die Zugabe der erfindungsgemäßen Polykieselsäure erhalten.

Die Herstellung der magnetisierbaren Schichten erfolgt in bekannter Weise. Hierzu wird das magnetische Material mit dem verwendeten Bindemittel und ausreichend Lösungsmittel in einer Dispergiermaschine, z.B. einer Topfkugelmühle oder einer Rührwerkskugelmühle, unter Zusatz gegebenenfalls der weiteren Zusatzstoffe dispergiert. Zur Einstellung des zweckmäßigen Bindemittel-Pigment-Verhältnisses können diese der Mischung entweder in festem Zustand oder in Form von 10 bis 60 % Lösungen bzw. 20 bis 60%igen Dispersionen zugegeben werden. Es hat sich als zweckmäßig erwiesen, die Dispergierung solange fortzuführen, bis eine extrem feine Vertielung des magnetischen Materials erreicht ist, was 1 bis 5 Tage erfordern kann. Durch anschließendes wiederholtes Filtrieren erhält man eine völlig homogene Magnetdispersion. Gegebenenfalls erforderliche Vernetzungsmittel werden vor der Beschichtung zur Dispersion gegeben.

Die Magnetdispersion wird nun mit Hilfe üblicher Beschichtungsmaschinen, z.B. mittels eines Linealgießers, auf den nichtmagnetischen Träger aufgetragen. Als nichtmagnetische Träger lassen sich die üblichen Trägermaterialien z.B. Polyethylenterephthalatfolie verwenden, insbesondere von 6 bis 36 µm Dicke. Bevor die noch flüssige Beschichtungsmischung auf dem Träger getrocknet wird, was zweckmäßigerweise bei Temperaturen von 50 bis 100°C während 0,2 bis 5 Minuten geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 20 bis 100°C, vorzugsweise 40 bis 80°C, geglättet und verdichtet werden. Die Dicke der Magnetschicht beträgt im allgemeinen 1 bis 20 µm, vorzugsweise 2 bis 12 µm.

Die erfingungsgemäßen magnetischen Aufzeichnungsträger zeichnen sich durch verbesserte mechanische Eigenschaften unter Beibehaltung der guten Aufzeichnungs- und Wiedergabequalität aus. Hervorzuheben sind die verbesserte Verschleißfestigkeit und Tropenfestigkeit sowie die Vermeidung von Pegeleinbrüchen und das Verhindern des Blockierens bei Temperaturlagerung bis 85°C.

Die Erfinfung ist anhand folgender Beispiele und Vergleichsversuche naher erläutert.

### Beispiel 1

In einer Stahlkugelmühle üblicher Bauart mit Stahlkugeln als Mahlkörper, wurden 100 Gew.-Teile ferromagnetischen Chromdioxids mit einer mittleren Teilchengröße von 0,5 µm und einem Verhältnis Länge zu Dicke von 4:1 zusammen mit 33,9 Gew.-Teilen einer 16,5%igen Lösung eines Polyurethanelastomeren, 5,6 Gew.-Teile einer 20%igen Lösung eines Polyvinylformals, bestehend aus 82 % Vinylformal-, 12 % Vinylacetat- und Vinylalkoholeinheiten, 0,5 Gew.-Teile N-Talgfett-1,3-Diaminoleat, 2 Gew.-Teile Zn-stearat, 0,6 Gew.-Teile Leinölfettsäure, 87 Gew.-Teile Tetrahydrofuran, Dioxan 1:1, sowie 1 Gew.-Teil einer hydrophobierten Kieselsäure (BET von 90 m²/g) 72 Std. dispergiert.

Anschießend wurde zu dieser vorgemahlenen Dispersion ein Gemisch aus 50,5 Gew.-Teilen der 16,5 %igen Polyurethanelastomerlösung, 8,33 Gew.-Teile der 20 %igen Polyvinylformallösung, 28,8 Gew.-Teile Tetr./Dioxan 1:1 sowie 0,25 Gew.-Teile eines Ölsäure/Stearinsäuregemisches zugegeben und weitere 2 Std. dispergiert.

Die so erhaltene Magnetbanddispersion wurde mit 6,7 Gew.-Teilen eines 50 %igen Triisocyanats, bestehend aus 3 Molen Toluylendiisocyanats und 1 Mol Trimethylolpropan versetzt, kräftig durchgerührt und anschließend durch ein Filter mit 3 µm Porenweite filtriert.

Mit einem Linealgießer wurde eine 7,5 µm starke Polyethylenterephthalatfolie richtig : Polyethylenterephthalatfolie mit dieser Dispersion beschichtet und nach Durchlaufen eines Magnetfeldes die Beschichtung anschließend bei 80°C getrocknet. Durch Hindurchführen zwischen beheizten Walzen (70°C, Liniendruck 200 kg/cm) wurde die Magnetschicht verdickt und geglättet. Die resultierende Magnetschicht betrug 5 µm. Die so beschichtete Folie wurde anschließend in Bänder von 3,81 mm Breite geschnitten.

### Beispiel 2

Es wurde wie im Beispiel 1 beschrieben verfahren, jedoch wurde die Menge an hydrophobierter Polykieselsäure von 1 auf 0,5 Gew.-Teile reduziert.

### Vergleichsversuch 1

Es wurde wie im Beispiel 1 beschrieben verfahren, jedoch ohne Zusatz von hydrophobierter Polykieselsäure.

### Vergleichsversuch 2

Es wurde wie im Beispiel 1 beschrieben verfahren, jedoch mit hydrophiler Polykieselsäure.

### Beispiel 3

Es wurde wie im Beispiel 1 beschrieben verfahren, zusätzlich wurde jedoch 0,5 Gew.-Teile einer Leinölfettsäure zugesetzt.

### Vergleichsversuch 3

Es wurde wie im Beispiel 3 beschrieben verfahren, jedoch wurde anstatt hydrophobierter Polykieselsäure hydrophile Kieselsäure mit einer BET von 100 m²/g verwendet.

### Beispiel 4

Es wurde wie in Beispiel 1 beschrieben verfahren, jedoch wurden neben der hydrophobierten Polykieselsäure 0,5 Gew.-Teile Polydimethylsiloxan (Viskosität 60.000 mPa.s) eingesetzt.

### Beispiel 5

Es wurde wie im Beispiel 4 beschrieben verfahren, jedoch wurde die Menge an hydrophobierter Polykieselsäure von 1 auf 0,5 Gew.-Teile reduziert.

### Vergleichsversuch 4

Es wurde wie im Beispiel 4 beschrieben verfahren, jedoch ohne Zusatz von hydrophobierter Polykieselsäure.

### Vergleichsversuch 5

Es wurde wie im Beispiel 4 beschrieben verfahren, jedoch wurde eine hydrophile Polykieselsäure eingesetzt.

### Beispiel 6

Es wurde wie im Beispiel 4 beschrieben verfahren, zusätzlich wurden jedoch 0,5 Gew.-Teile einer Leinölfettsäure zugesetzt.

### Vergleichsversuch 6

Es wurde wie im Beispiel 6 beschrieben verfahren, jedoch wurde anstatt hydrophobierter Polykieselsäure hydrophile Kieselsäure mit einer BET von 100 m² g verwendet.

### Vergleichsversuch 7

Die Magnetschicht gemäß Vergleichsversuch 6 wurde mittels Stearylisocyanat hydrophobiert.

### Beispiel 7

Es wurde wie im Beispiel 6 beschrieben verfahren, jedoch wurde statt des Polydimethylsiloxans mit einer Viskosität von 60.000 mPas eines mit 500.000 mPas eingesetzt.

### Vergleichsversuch 8

Es wurde wie im Beispiel 6 beschrieben verfahren, jedoch wurde statt des Polydimethylsiloxans mit einer Viskosität von 60.000 mPas eines mit 100 mPas verwendet.

### Vergleichsversuch 9

Das Beispiel 7 wurde ohne Zusatz an Polydimethylsiloxan wiederholt.

### Vergleichsversuch 10

Es wurde wie im Beispiel 7 beschrieben verfahren, jedoch ohne Zusatz der hydrophobierten Polykieselsäure.

Die aus den Beispielen und Vergleichsversuchen resultierenden Bänder wurden folgenden Tests unterzogen:

### Test 1

### Verklebungsneigung nach Warmlagerung

Bei diesem Test wird geprüft, welche Kraft notwendig ist, um evtl. auftretende Verklebungskräfte Schicht/Folie beim Abwickeln zu überwinden.

Dazu wurde das zu prüfende Band in eine Compactcassette (Typ C 90) konfektioniert, unter definiertem Drehmoment aufgewickelt, 8 h bei 85°C gelagert und anschließend ungebremst die auftretende Verklebungskräfte gemessen. Als Vergleichswert dient jeweils die in der unmittelbaren Kernnähe auftretende maximale Rückhaltekraft (Angabe in cN).

### Test 2

### Wow + Flutter nach Warmlagerung

Compactcassetten mit schlechten Laufeigenschaften neigen nach Warmlagerung zu erhöhtem Wow + Flutter. Besonders kritisch ist dabei das erste Abspielen nach der Warmlagerung. Gemessen wurde das Wow - Flutterverhalten nach IEC 386, Maß für Geschwindigkeitsschwankungen (Angabe Modulation [%]).

### Test 3

### Eluatwert

Der Eluatwert in mg/l wurde gemäß DIN 38 414, Seite 4 bestimmt.

### Test 4

### Tropentauglichkeit

Prüfung der Abriebfestigkeit von Prüfbändern bezüglich Ablagerungen am Aufnahme/Wiedergabekopf (AWK) und Capstan nach Lagerung und Prüfung in einem feuchtwarmen Klima. Ermittlung der Blockierrate.

### Lagerbedingungen

| | |
|---|---|
| Lagerzeit: | 4 Wochen |
| Lagerklima: | 40°C, 93 % r.F. |
| Prüfling: | 10 Stück C 60, C 90 oder C 120 |

### Prüfbedingungen

| | |
|---|---|
| Prüfgerät: | Verwendung von 10 Laufwerken mit je einem AWK mit MU-Metall-Kopfspiegel |
| Bandgeschwindigkeit: | 9,5 cm/sec |
| Prüfling: | Die unter den oben beschriebenen Bedingungen gelagerten Cassetten |
| Prüfzeit: | 10 Cassettendurchläufe |
| Prüfklima: | 30°C, 93 % r.F., Akklimatisation im Prüfklima min. 8 Std. |

Die aus dem Lagerklima entnommenen CC werden im Wiedergabebetrieb auf dem Prüfgerät betrieben. Nach beendetem Durchlauf wird die CC gewendet und wieder gestartet. Dieser Vorgang wird bis zum 10. Durchlauf wiederholt, die einzelnen CC verbleiben immer auf dem gleichen Prüfgerät.

Die Ablagerungen am AWK und Capstan werden getrennt, jeweils nach dem ersten und zehnten Durchlauf, gewertet (Noten 1 bis 6, wobei 1 = kein Abrieb und 6 = starker Abrieb bedeuten).

### Test 5

### Pegelstabilität

Prüfung der Pegelstabilität von Prüfbändern bei 100 Durchläufen sowie Beurteilung der Abriebfestigkeit des Prüfbandes durch Beurteilung der Ablagerungen an Löschkopf (LK), Aufnahme-Wiedergabekopf (AWK) und Capstan.

### Prüfbedingungen:

Prüfgerät: Trio (Kenwood) 3-Kopf-Recorder
Bandgeschwindigkeit: 4,75 cm/sec
Aufgezeichnete Frequenz: 8 kHz
Anzahl der Cassettendurchläufe: 100
Pegelschreiber: Fa. Bruel u. Kjear, Typ 2305
Prüfklima: 23°C, 50 % r.F., Akklimatisation im Prüfklima min. 1 Std.

Bei jedem Durchlauf wird bei -7 dB Aussteuerung entsprechend dem jeweiligen Arbeitspunkt ein 8 kHz Signal aufgezeichnet und hinter Band von dem Pegelschreiber wieder registriert.

Beurteilt wird die Anzahl der Durchläufe welche keine Pegeleinbrüche > 2 dB bzw. > 6 dB aufzeigen.

Die Ablagerungen an LK, AWK und Capstan werden nach einer vorliegenden Tabelle bewertet (Noten 1 bis 6).

### Test 6

### Beschichtungsbild

Hierbei wird die Oberfläche der Magnetschicht auf Störungen, wie Kraterbildung oder Orangenschalenstruktur untersucht.

Die an den magnetischen Aufzeichnungsträgern gemäß Beispiel 1 bis 3 und Vergleichsversuche 1 bis 3 erhaltenen Meßergebnisse sind in der Tabelle 1, diejenigen entsprechend den Beispielen 4 bis 7 und den Vergleichsversuchen 4 bis 10 sind in der Tabelle 2 angegeben.

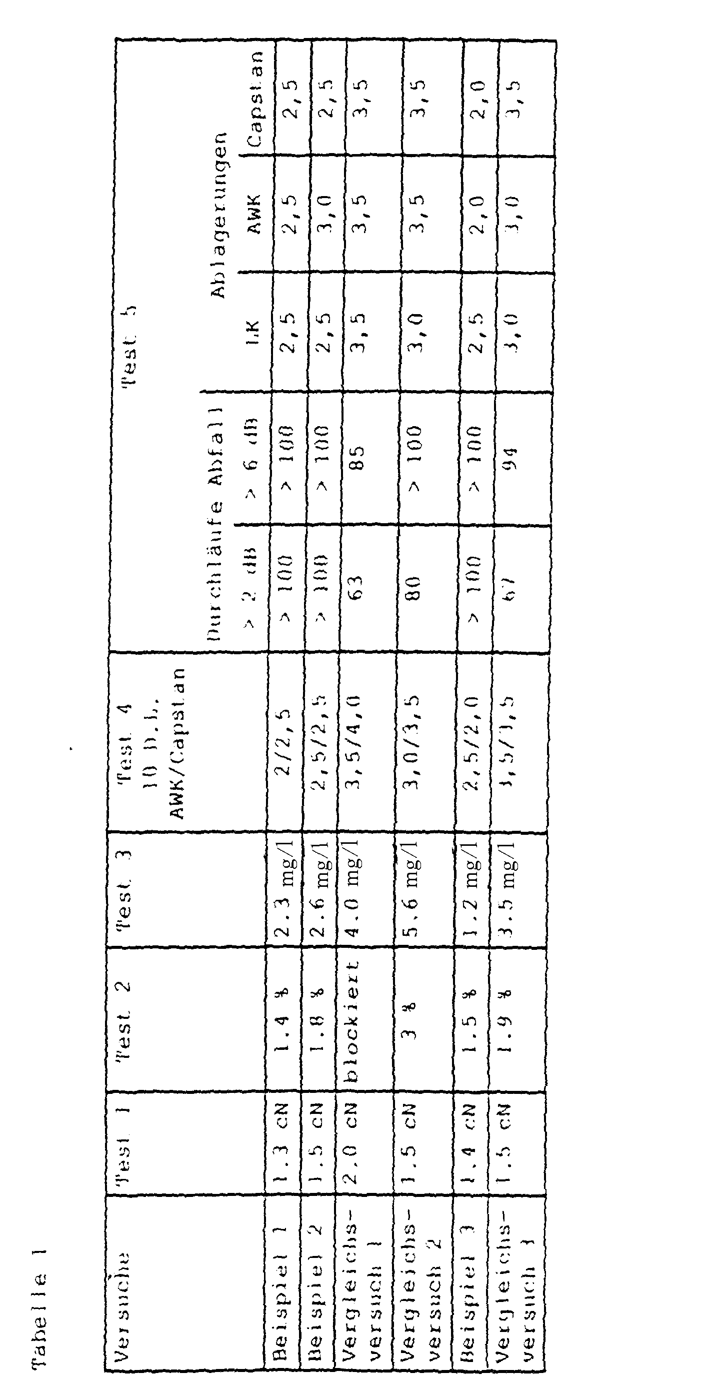

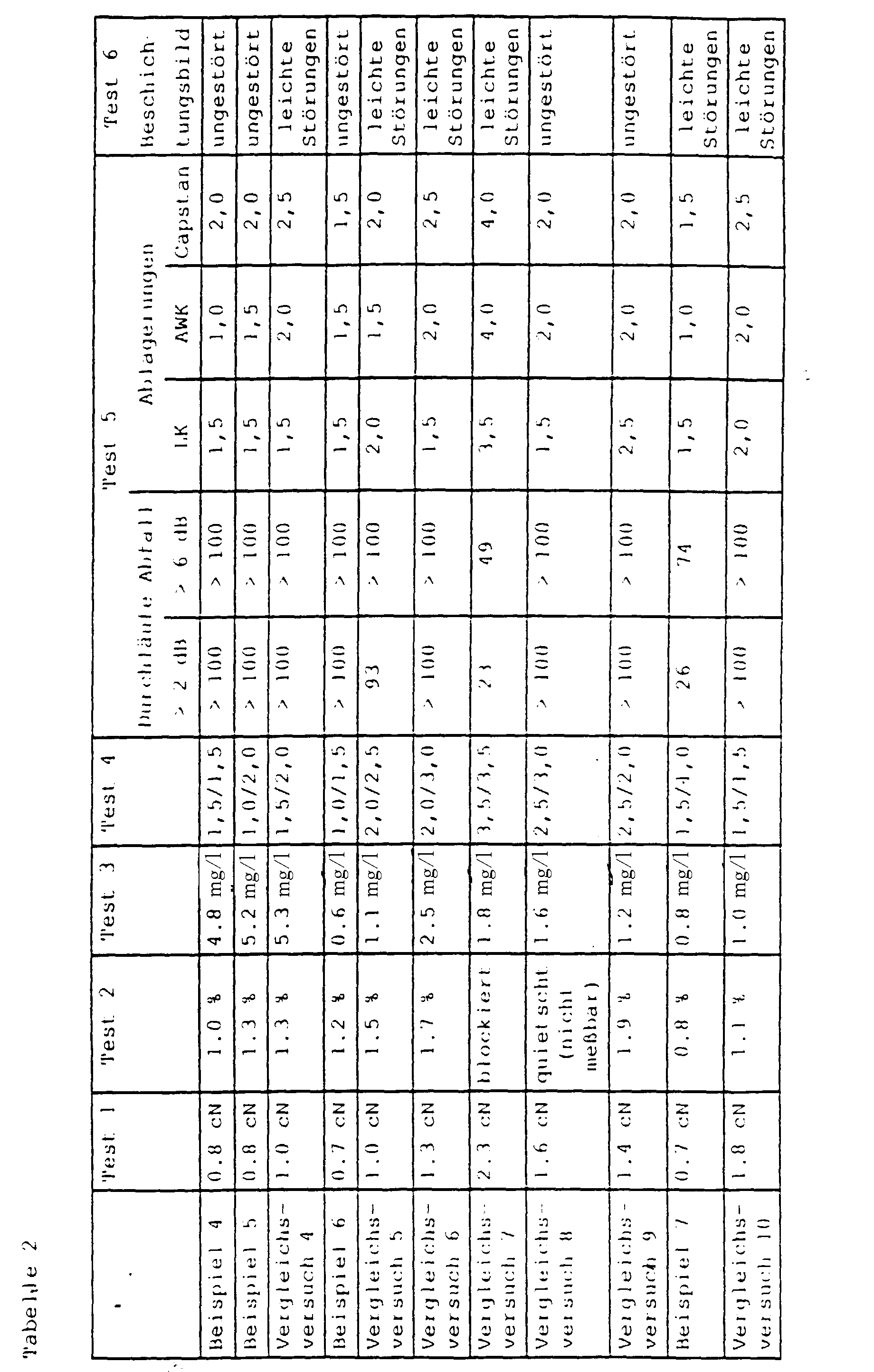

## Patentansprüche

1. Magnetische Aufzeichnungsträger, erhalten durch Herstellen einer Dispersion von anisotropem magnetischem Material, hydrophobierter Polykieselsäure und üblichen Zusatzstoffen in einer Lösung eines polymeren Bindemittels in einem organischen Lösungsmittel, schichtförmiges Auftragen der Dispersion auf ein nichtmagnetisierbares Trägermaterial, anschließendes Ausrichten des anisotropen magnetischen Materials in einem Magnetfeld und Verfestigen der aufgebrachten Magnetschicht, dadurch gekennzeichnet, daß eine feinteilige Polykieselsäure, die mit 1,8 bis 3,2 Gew.-%, bezogen auf die Polykieselsäure chemisch gebundenem Kohlenstoff hydrophobiert ist, in einer Menge von 0,3 bis 5 Gew.-%, bezogen auf die Menge an magnetischem Material, in der Magnetschicht enthalten ist.

2. Magnetischer Aufzeichnungsträger nach Anspruch 1, dadurch gekennzeichnet, daß in der Magnetschicht zusätzlich 0,1 bis 1,5 Gew.-%, bezogen auf die Menge an magnetischem Material, eines hochviskosen Polysiloxans enthalten ist.

## Claims

1. A magnetic recording medium obtained by preparing a dispersion of anisotropic magnetic material, hydrophobic polysilicic acid and conventional additives in a solution of a polymeric binder in an organic solvent, applying the dispersion as a layer to a nonmagnetizable substrate, then orienting the anisotropic magnetic material in a magnetic field and solidifying the applied magnetic layer, wherein a finely divided polysilicic acid rendered hydrophobic with from 1.8 to 3.2% by weight, based on the polysilicic acid, of chemically bound carbon is present in an amount of from 0.3 to 5% by weight, based on the amount of magnetic material, in the magnetic layer.

2. A magnetic recording medium as claimed in claim 1, wherein from 0.1 to 1.5% by weight, based on the amount of magnetic material, of a highly viscous polysiloxane are additionally present in the magnetic layer.

## Revendications

1. Supports magnétiques d'enregistrement obtenus par production d'une dispersion de matériau magnétique anisotrope, d'acide polysilicique rendu hydrophobe et d'additifs usuels dans une solution d'un liant polymère dans un solvant organique, application en couche de cette dispersion sur un substrat non aimantable, puis orientation du matériau magnétique anisotrope dans un champ magnétique et solidification de la couche magnétique appliquée, caractérisés par le fait que la couche magnétique contient de 0,3 à 5 % en masse, relativement à la quantité de matériau magnétique, d'un acide polysilicique à éléments fins qui est rendu hydrophobe par 1,8 à 3,2 % en masse, relativement à lui, de carbone fixé chimiquement.

2. Support magnétique d'enregistrement selon la revendication 1, caractérisé par le fait que la couche magnétique contient en plus de 0,1 à 1,5 % en masse, relativement à la quantité de matériau magnétique, d'un polysiloxane de haute viscosité.
